# EUROPEAN PATENT APPLICATION

(11) **EP 4 675 839 A1**
(43) Date of publication of application: **07.01.2026**
(21) Application number: 24762950.4
(22) Date of filing: 31.01.2024
(51) Int. Cl.: H01M 50/574, H01M 50/583, H01M 50/244

(54) **BATTERY TRAY, BATTERY PACK AND ELECTRIC DEVICE**

(30) Priority: 28.02.2023 CN 202320439071 U
(71) Applicant: BYD Company Limited, Shenzhen, Guangdong 518118 (CN)
(72) Inventor: LIAO, Zhengyuan, Shenzhen, Guangdong 518118 (CN); XIE, Shifeng, Shenzhen, Guangdong 518118 (CN); MENG, Jinqiang, Shenzhen, Guangdong 518118 (CN); MA, Bing, Shenzhen, Guangdong 518118 (CN); FU, Weizhuang, Shenzhen, Guangdong 518118 (CN)
(74) Representative: Schott, Jakob Valentin
(86) International application number: PCT/CN2024/075064
(87) International publication number: WO 2024/179267

(57) **Abstract**

A battery tray, a battery pack, and an electric device are provided. The battery tray includes: a tray body, configured to carry a plurality of cells; a side beam, disposed around the tray body, and configured to cooperate with the tray body to accommodate the cell; and a protection apparatus, disposed on the side beam, where the protection apparatus includes a fuse and a relay that are configured to be connected in series between the plurality of cells, and the relay is connected to a controller of the battery pack, to control connection or disconnection of the relay by using the controller.

## Description

### CROSS-REFERENCE TO RELATED APPLICATIONS

This application claims priority to Chinese Patent Application No. 202320439071.6, filed with the China National Intellectual Property Administration on February 28, 2023 and entitled "BATTERY TRAY AND BATTERY PACK", which is incorporated herein by reference in its entirety.

### TECHNICAL FIELD

The present disclosure relates to the field of battery mounting technologies, and specifically, to a battery tray, a battery pack, and an electric device.

### BACKGROUND

In a related technology, a battery pack is usually equipped with a smart fuse (pyrotechnic fuse) at the rear of a battery tray. A working principle of the smart fuse is to sever an internal high-voltage channel by using an internal explosive charge. Once disconnected, the smart fuse cannot be reused. In addition, such protection manner is activated only when a current in the battery pack increases to a specific extent, resulting in a failure to prevent hazard escalation in advance.

### SUMMARY

In view of this, the present disclosure provides a battery tray, a battery pack, and an electric device, to at least partially resolve problems existing in a related technology.

The present disclosure provides a battery tray, including: a tray body, configured to carry a plurality of cells; a side beam, disposed around the tray body, and configured to cooperate with the tray body to accommodate the cell; and a protection apparatus, disposed on the side beam, where the protection apparatus includes a fuse and a relay that are configured to be connected in series between the plurality of cells, and the relay is connected to a controller of the battery pack, to control connection or disconnection of the relay by using the controller.

According to an embodiment of this application, the fuse is detachably mounted on the side beam.

According to an embodiment of this application, the side beam is provided with a cavity, the protection apparatus includes a housing, the housing is configured to: accommodate and mount the fuse and the relay, and the housing is detachably mounted in the cavity.

According to an embodiment of this application, the protection apparatus further includes a connector and a connecting copper busbar, the connector is disposed in the housing, and is configured to electrically connect the relay to a cable of the controller, and the connecting copper busbar is configured to electrically connect the relay to the cell.

According to an embodiment of this application, the connector is located between the fuse and the relay, and the connecting copper busbar is connected to the top of the relay, and bends to extend between the fuse and the relay.

According to an embodiment of this application, the protection apparatus further includes a protective cover, and the protective cover is detachably disposed on a side that is of the housing and that is close to an outer side of the battery tray.

According to an embodiment of this application, one of the protective cover and the housing is provided with a clamping groove, and the other is provided with a clamping protrusion, and the clamping groove and the clamping protrusion can be engaged through insertion.

According to an embodiment of this application, the side beam is provided with a groove at a periphery on a side that is of the cavity and that is close to the outer side of the battery tray, a sealing ring is disposed in the groove, the battery tray includes a sealing cover configured to close the cavity on the outer side of the battery tray, and the sealing cover can be pressed onto the sealing ring and mounted on the side beam by using a fastener.

According to an embodiment of this application, a stop boss is provided on a side that is of the cavity and that is close to an inner side of the battery tray, and an abutting portion is correspondingly disposed on the housing, so that the abutting portion abuts against the stop boss, and the abutting portion is connected to the stop boss by using a fastener.

According to an embodiment of this application, the side beam configured to mount the housing is configured as a die-cast side beam formed through die-casting molding, and a plurality of lifting lugs are integrally formed on the die-cast side beam.

According to an embodiment of this application, a plurality of weight reduction structures are formed on the die-cast side beam.

According to an embodiment of this application, a plurality of cable mounting holes are formed on the die-cast side beam.

According to an embodiment of this application, an explosion-proof valve is disposed on each of two sides of the die-cast side beam.

According to an embodiment of this application, the battery tray is divided into two accommodation cavities by an intermediate beam, and each of the accommodation cavities is configured to accommodate the plurality of cells.

According to an embodiment of this application, the protection apparatus is disposed on a side wall of one of the two accommodation cavities, and the cells in the two accommodation cavities are connected to each other.

According to an embodiment of this application, the protection apparatus is disposed on both side walls of the two accommodation cavities, and the protection apparatus is connected to the cells in the two accommodation cavities separately.

According to a second aspect according to embodiments of the present disclosure, a battery pack is provided, including a battery tray and a plurality of cells disposed in the battery tray. The battery tray is the battery tray provided in the present disclosure.

An electric device includes the battery pack provided in the present disclosure.

According to the foregoing technical solutions, the protection apparatus in this embodiment of the present disclosure includes the relay and the fuse, so that dual protection can be implemented. The relay may perform active disconnection protection based on information collected by the controller, and may be reused after a fault is eliminated. The fuse may perform passive disconnection protection when the relay does not work or may further perform passive protection based on disconnection of the relay. The protection apparatus in this embodiment of the present disclosure uses a combination of active protection and passive protection, so that the battery pack can be better protected, and hazard escalation in the battery pack can be prevented.

Other features and advantages of the present disclosure is described in detail in the subsequent specific implementations.

### BRIEF DESCRIPTION OF THE DRAWINGS

Accompanying drawings are used to provide further understanding of the present disclosure, and constitute a part of this specification. The accompanying drawings together with the following specific implementations are used to explain the present disclosure, but do not constitute a limitation on the present disclosure. In the accompanying drawings:
FIG. 1 is a diagram of a battery pack according to an example implementation of the present disclosure;
FIG. 2 is a diagram of a battery tray according to an example implementation of the present disclosure;
FIG. 3 is a partial diagram of a battery pack according to an example implementation of the present disclosure;
FIG. 4 is an enlarged view of a portion A in FIG. 3, where exploded structures of a sealing cover and the portion are also shown;
FIG. 5 is a diagram of a side beam viewed from an outer side of a battery tray according to an example implementation of the present disclosure;
FIG. 6 is an enlarged view of a portion B in FIG. 5;
FIG. 7 is a diagram of a protection apparatus with a protective cover according to an example implementation of the present disclosure;
FIG. 8 is a diagram of a protection apparatus without a protective cover according to an example implementation of the present disclosure;
FIG. 9 is a diagram of an arrangement position of a protection apparatus according to an example implementation of the present disclosure;
FIG. 10 is a diagram of another arrangement position of a protection apparatus according to an example implementation of the present disclosure;
FIG. 11 is a diagram of a side beam viewed from an inner side of a battery tray according to an example implementation of the present disclosure; and
FIG. 12 is a diagram of an electric device according to an example implementation of the present disclosure.

### DESCRIPTION OF EMBODIMENTS

The following describes in detail specific implementations of the present disclosure with reference to accompanying drawings. It should be understood that the specific implementations described herein are merely used to describe and explain the present disclosure but are not intended to limit the present disclosure.

In the present disclosure, unless otherwise stated, orientation words such as "inside and outside" mean the inside and the outside of a contour of a corresponding part or component. The inside and outside of a battery tray means the inside and the outside of a frame surrounded by side beams. Terms such as "first" and "second" used in the present disclosure are intended to distinguish between one element and another element, and have no sequence or importance. In addition, when the following descriptions relate to the accompanying drawings, unless otherwise specified, same numbers in different accompanying drawings represent a same or similar element.

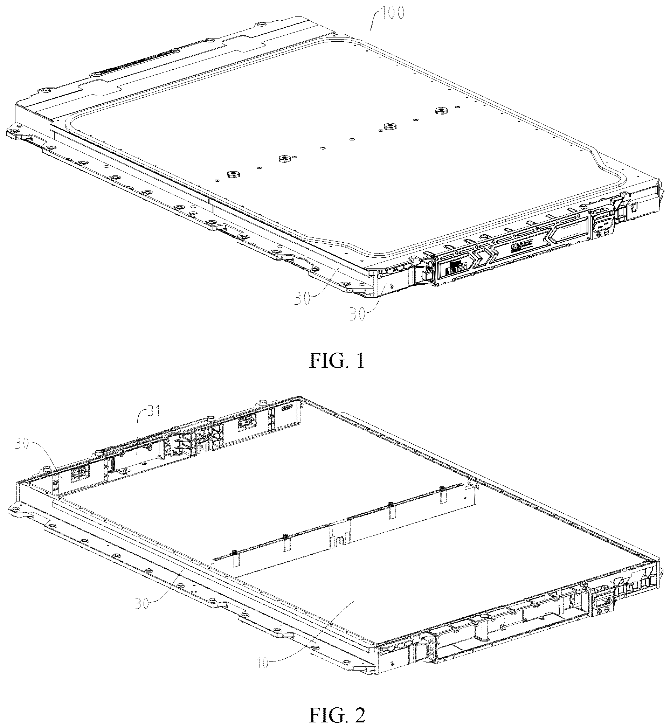

In an embodiment of the present disclosure, with reference to FIG. 1 to FIG. 3, a battery tray 100 is provided, including a tray body 10 configured to carry a plurality of cells 20 and a side beam 30 that is disposed around the tray body 10 and that is configured to cooperate with the tray body 10 to accommodate the cell 20. For example, four side beams 30 are disposed, to enclose a square accommodation cavity configured to carry the cell 20.

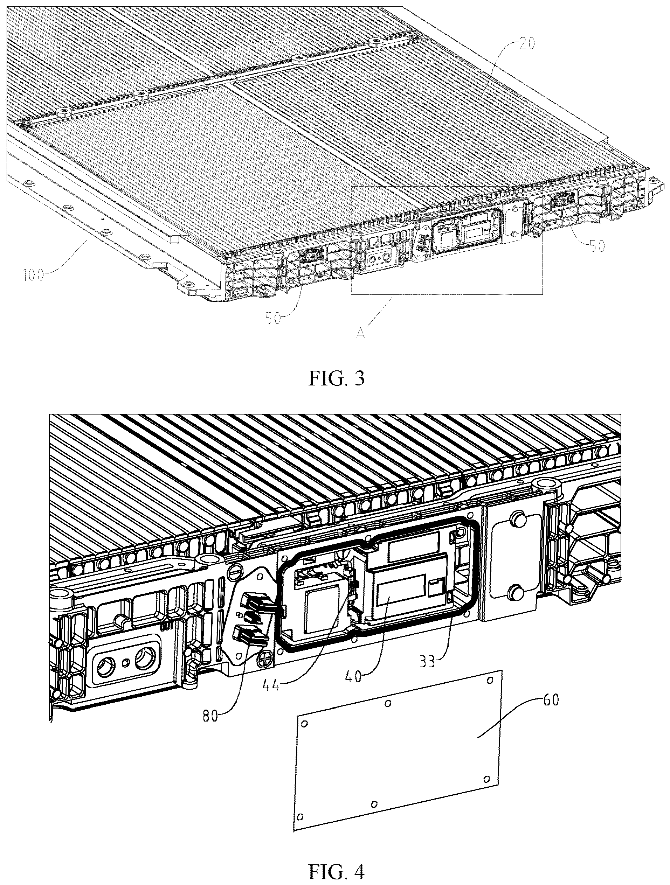

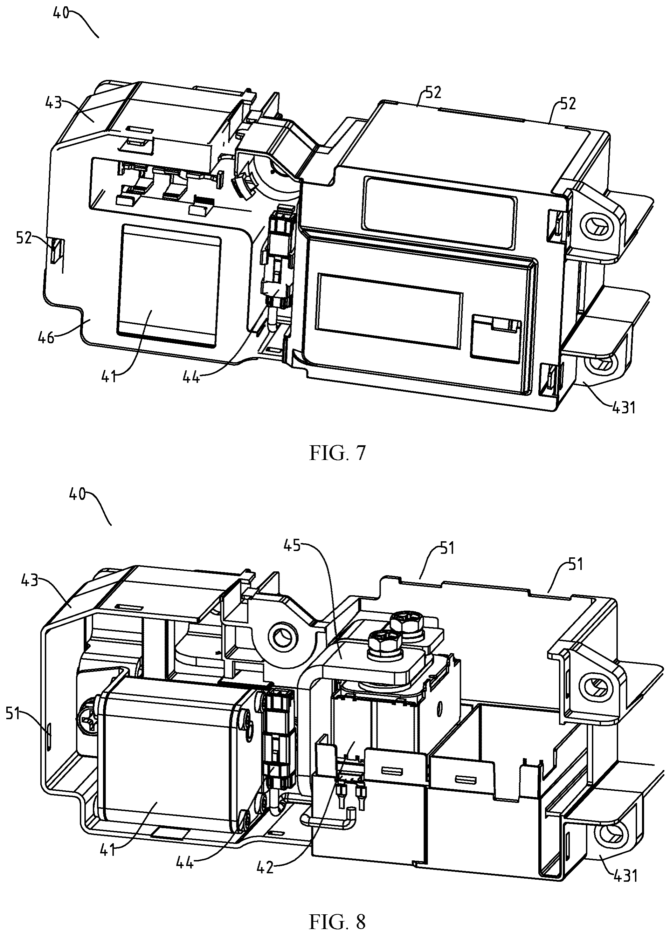

In this embodiment of the present disclosure, with reference to FIG. 4 and FIG. 8, the battery tray 100 may further include a protection apparatus 40 disposed on the side beam 30. The protection apparatus 40 includes a fuse 41 and a relay 42 that are configured to be connected in series between the plurality of cells 20, and the relay 42 can be connected to a controller of a battery pack, to control connection or disconnection of the relay 42 by using the controller. The relay 42 may be a voltage divider relay, and the protection apparatus 40 may evenly divide a total of cells into two parts. The controller of the battery pack may collect a status of the cell 20 in the battery pack. When the controller receives that an emergency situation occurs inside the battery pack, for example, a temperature is excessively high or a voltage is excessively large, the controller may control the relay 42 to disconnect. In this way, the entire battery pack can be disconnected at high voltage. If the emergency situation is a false alarm or when the emergency situation has been resolved, the controller controls the relay 42 to connect again, and the relay 42 can continue to be used. When problems such as a short circuit occur inside the battery pack, the fuse 41 may be disconnected, to protect the battery pack.

According to the foregoing technical solutions, the protection apparatus 40 in this embodiment of the present disclosure includes the relay 42 and the fuse 41, so that dual protection can be implemented. The relay 42 may perform active disconnection protection based on information collected by the controller, and may be reused after a fault is eliminated. The fuse 41 may perform passive disconnection protection when the relay 42 does not work or may further perform passive protection based on disconnection of the relay 42. The protection apparatus 40 in this embodiment of the present disclosure uses a combination of active protection and passive protection, so that the battery pack can be better protected, and hazard escalation in the battery pack can be prevented.

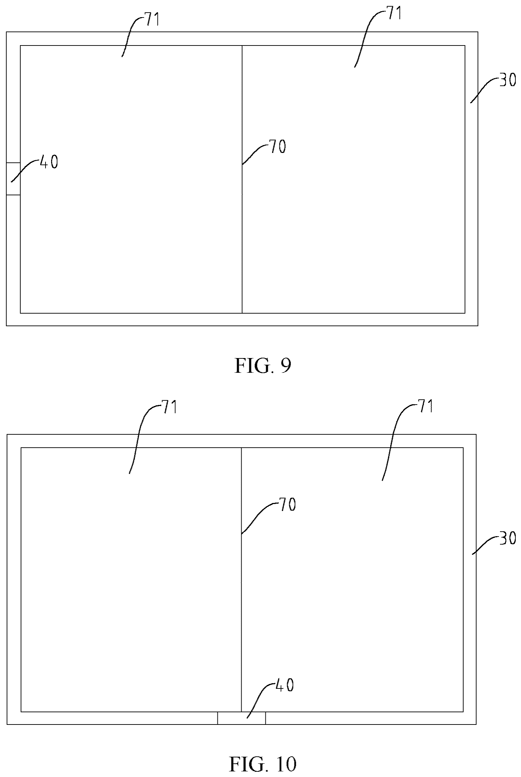

Refer to FIG. 9 and FIG. 10. An intermediate beam 70 may be disposed at the middle of the tray body 10, and is configured to divide the tray into two parts, to separate the tray into two accommodation cavities 71, and the plurality of cells 20 may be respectively disposed in the accommodation cavities 71 on two sides of the intermediate beam 70. The intermediate beam 70 is disposed, so that strength of the battery tray 100 can be improved. In addition, the cells 20 can be separated, to prevent a thermal failure on cells 20 on one side from affecting cells 20 on the other side. The intermediate beam 70 and the four side beams 30 may be welded together, and the bottoms of the intermediate beam 70 and the side beams 30 may be bonded to a cooling plate, so that the cooling plate can be used as the tray body 10.

In an embodiment, with reference to FIG. 9, the protection apparatus 40 may be disposed on a side wall of one of the two accommodation cavities 71, and specifically in FIG. 9, may be disposed on a side beam 30 on a left side of the battery tray 100. The cells 20 in the two accommodation cavities 71 may be connected to each other. In other words, cells 20 on the left side of the intermediate beam 70 in FIG. 9 may be electrically connected to cells 20 on a right side of the intermediate beam 70, so that the cells 20 in the two accommodation cavities 71 are protected by using the protection apparatus 40 on one side.

In another embodiment, with reference to FIG. 10, the protection apparatus 40 may be disposed on both side walls of the two accommodation cavities 71, and specifically in FIG. 10, may be disposed on a side beam 30 on a lower side of the battery tray 100, and is disposed at a position at which the two accommodation cavities 71 are connected, so that the protection apparatus 40 can be separately connected to the cells 20 in the two accommodation cavities 71.

In this embodiment of the present disclosure, the fuse 41 may be detachably mounted on the side beam 30. For example, the fuse 41 may be mounted on the side beam 30 through clamping, or may be mounted by using a binding member. In such detachable manner, the fuse 41 can be replaced after disconnected and damaged, without replacing the entire protection apparatus 40 or the entire tray, to reduce costs.

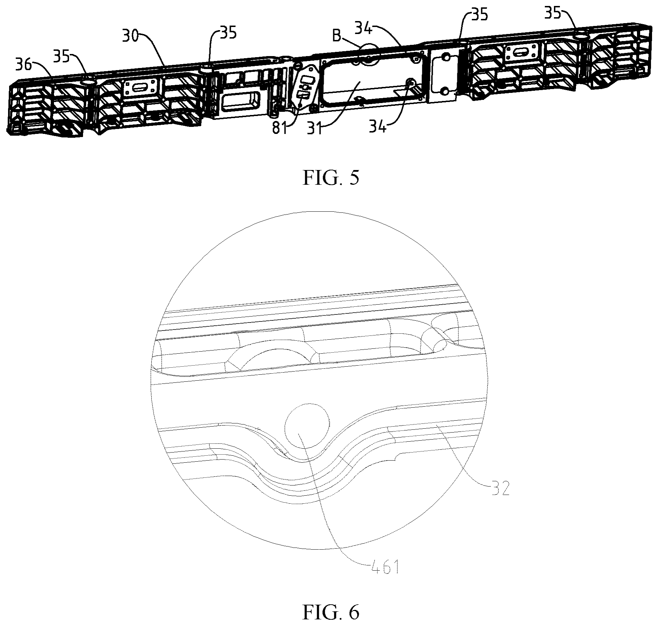

With reference to FIG. 5, FIG. 7, and FIG. 8, a cavity 31 may be provided on the side beam 30, the protection apparatus 40 may include a housing 43 configured to accommodate the fuse 41 and the relay 42, and the housing 43 may be detachably mounted in the cavity 31. A size of the cavity 31 may adapt to a size of the housing 43, to ensure fastening mounting. The fuse 41 and the relay 42 may be integrated into one housing 43, and the fuse 41 or the relay 42 may be further replaced by disassembling the housing 43, or the fuse 41 may be detachably mounted in the housing 43, to replace the fuse 41. A shape and the size of the housing 43 may be adaptably disposed based on shapes and sizes of the relay 42 and the fuse 41. The housing 43 may be made of a plastic material to provide insulation.

With reference to FIG. 7 and FIG. 8, in some embodiments, the protection apparatus 40 may further include a connector 44 disposed in the housing 43 and a connecting copper busbar 45. The connector 44 may be configured to electrically connect the relay 42 to a cable of the controller, to control connection or disconnection of the relay 42 by using the controller. The connecting copper busbar 45 may be configured to electrically connect the relay 42 to the cell 20, to connect the protection apparatus 40 in series between the plurality of cells 20, to protect the cells 20.

The connector 44 may be located between the fuse 41 and the relay 42, and separately connected to the relay 42 and the cell 20 through a cable. The connecting copper busbar 45 may be connected to the top of the relay 42, bend to extend between the fuse 41 and the relay 42, and further extend toward the inside of the battery tray 100, to connect to the cell 20.

As shown in FIG. 7, according to an embodiment of the present disclosure, the protection apparatus 40 may further include a protective cover 46 detachably disposed on a side that is of the housing 43 and that is close to an outer side of the battery tray 100. The outer side of the tray means a side away from a side of the battery pack accommodating the cell 20, and a side accommodating the cell 20 is an inner side. The protective cover 46 can protect the protection apparatus 40 to some extent, to prevent an external substance from damaging the protection apparatus 40 or a security risk caused due to internal and external connections through the protection apparatus 40. The protective cover 46 is detachably mounted, so that the fuse 41 can be replaced or maintenance can be performed on another part or component by removing the protective cover 46.

The detachable mounting may be mounting by using a fastener, for example, screwing by using a bolt. For example, as shown in FIG. 6, a mounting hole 461 may be formed on the side beam, and threaded holes may be formed on the housing 43 and the protective cover 46 accordingly to be connected by using a bolt. In addition, with reference to FIG. 7 and FIG. 8, one of the protective cover 46 and the housing 43 may be provided with a clamping groove 51, and the other may be provided with a clamping protrusion 52. The clamping groove 51 and the clamping protrusion 52 can be engaged through insertion. Structure forms of the clamping groove 51 and the clamping protrusion 52 may be not limited, so that the clamping groove 51 and the clamping protrusion 52 can be inserted.

In some embodiments, with reference to FIG. 4 to FIG. 6, the side beam 30 may be provided with a groove 32 at a periphery on a side that is of the cavity 31 and that is close to the outer side of the battery tray 100, a sealing ring 33 may be disposed in the groove 32, the battery tray 100 may include a sealing cover 60 configured to close the cavity 31 on the outer side of the battery tray 100, and the sealing cover 60 may be pressed onto the sealing ring 33, and the sealing cover 60 is fastened on the side beam 30 by using a fastener. The sealing ring 33 may provide sealing, to protect an internal structure of the battery pack.

With reference to FIG. 5 and FIG. 7, a stop boss 34 may be provided on a side that is of the cavity 31 and that is close to an inner side of the battery tray 100, and an abutting portion 431 may be correspondingly disposed on the housing 43. The housing 43 may be inserted into the cavity 31 from an outer side of the side beam 30, and abut against the stop boss 34 through the abutting portion 431, to implement positioning and mounting of the housing 43. The stop boss 34 and the abutting portion 431 may be correspondingly provided with mounting threaded holes, so that the abutting portion 431 can be connected to the stop boss 34 through a fastener that penetrates through the mounting threaded holes, to mount the housing 43 on the side beam 30. The stop boss 34 is disposed, so that a position of the housing 43 can be positioned, and can prevent the housing 43 from extending into the inside of the tray and affecting mounting of the cell 20. In addition, the housing 43 can be mounted from outside to inside, and conversely, the housing 43 may be directly taken out from the outer side of the tray for replacement, maintenance, or the like, so that mounting and replacement of the protection apparatus 40 are both separated from the tray body 10, production costs are low, and disassembly and assembly processes are simple and easy to implement.

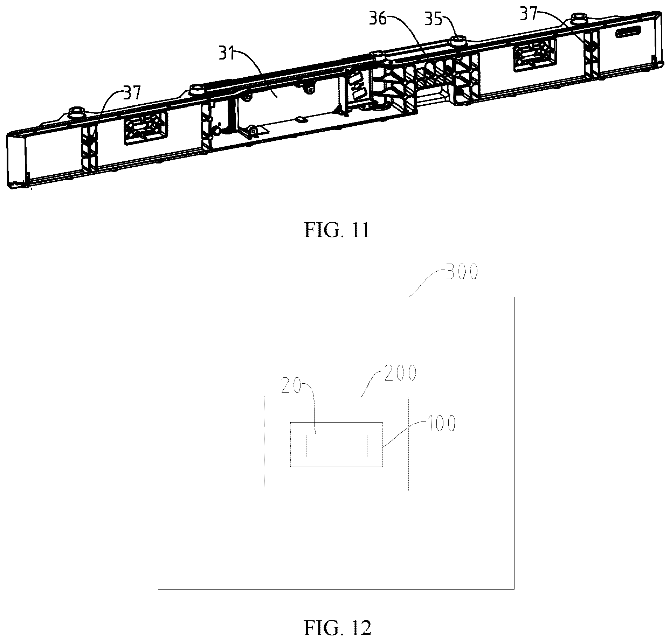

In this embodiment of the present disclosure, the side beam 30 configured to mount the housing 43 may be configured as a die-cast side beam 3 formed through die-casting molding, and the die-cast side beam may be a rear beam of the battery pack, for example, may be a metal aluminum die-cast rear beam. This die-cast side beam 30 helps form the foregoing structures such as the cavity 31 and the stop boss 34. In addition, as shown in FIG. 5 and FIG. 11, a plurality of lifting lugs 35 may be integrally formed on the die-cast side beam 30, and are configured to fasten the battery pack on an entire vehicle. In this way, there is no need to weld an additional lifting lug 35, and a welding process is reduced. Moreover, a weight reduction structure 36 and a cable mounting hole 37 may be formed on the die-cast side beam 30. The weight reduction structure 36 may reduce a weight of the overall battery pack, and may also facilitate die-cast molding of the die-cast side beam 30. The cable mounting hole 37 may facilitate mounting of a cable, and there is no need to dispose an additional cable mounting structure.

An explosion-proof valve 50 is disposed on each of two sides of the die-cast side beam 30. One explosion-proof valve 50 is disposed on each of the two sides, so that a speed of the battery pack for responding to thermal runaway can be improved, and safety of the battery pack can be improved.

With reference to FIG. 4, a PTC port 80 may be provided on a side of the protection apparatus 40, and a PTC mounting hole 81 may be provided on the side beam 30, so that the PTC port 80 is led out from an inner side of the side beam 30.

According to a second aspect according to embodiments of the present disclosure, with reference to FIG. 12, a battery pack 200 is provided. The battery pack 200 includes a battery tray 100 and a plurality of cells 20 disposed in the battery tray 100. The battery tray 100 is the foregoing battery tray. The battery pack 200 has all the foregoing beneficial effects of the battery tray 100. Details are not described herein again.

According to a third aspect according to embodiments of the present disclosure, with reference to FIG. 12, an electric device 300 is provided. The electric device 300 includes the foregoing battery pack 200, and has all the foregoing beneficial effects of the battery pack 200. Details are not described herein again.

The foregoing describes in detail the preferred implementations of the present disclosure with reference to the accompanying drawings. However, the present disclosure is not limited to the specific details in the foregoing implementations. A plurality of simple variations may be made to the technical solutions of the present disclosure within the technical concept scope of the present disclosure. These simple variations all fall within the protection scope of the present disclosure.

In addition, it should be noted that the specific technical features described in the foregoing specific implementations may be combined in any appropriate manner when there is no contradiction. To avoid unnecessary repetition, various possible combinations are not further described in the present disclosure.

Moreover, various implementations of the present disclosure may also be combined as required. Provided that combinations do not depart from the idea of the present disclosure, the combinations shall also be considered as the content disclosed in the present disclosure.

## Claims

1. A battery tray (100), comprising:
a tray body (10), configured to carry a plurality of cells (20);
a side beam (30), disposed around the tray body (10), and configured to cooperate with the tray body (10) to accommodate the cell (20); and
a protection apparatus (40), disposed on the side beam (30), the protection apparatus (40) comprising a fuse (41) and a relay (42) that are configured to be connected in series between the plurality of cells (20), wherein the relay (42) is connected to a controller of a battery pack, the controller is configured to control connection or disconnection of the relay (42) .

2. The battery tray (100) according to claim 1, wherein the fuse (41) is detachably mounted on the side beam (30).

3. The battery tray (100) according to claim 1 or 2, wherein the side beam (30) is provided with a cavity (31), the protection apparatus (40) comprises a housing (43), the housing (43) is configured to accommodate and mount the fuse (41) and the relay (42), and the housing (43) is detachably mounted in the cavity (31).

4. The battery tray (100) according to claim 3, wherein the protection apparatus (40) further comprises a connector (44) and a connecting copper busbar (45), the connector (44) is disposed in the housing (43), and is configured to electrically connect the relay (42) to a cable of the controller, and the connecting copper busbar (45) is configured to electrically connect the relay (42) to the cell (20).

5. The battery tray (100) according to claim 4, wherein the connector (44) is located between the fuse (41) and the relay (42), and the connecting copper busbar (45) is connected to the top of the relay (42), and bends to extend between the fuse (41) and the relay (42).

6. The battery tray (100) according to any one of claims 3 to 5, wherein the protection apparatus (40) further comprises a protective cover (46), and the protective cover (46) is detachably disposed on a side of the housing (43), the side is close to an outer side of the battery tray (100).

7. The battery tray (100) according to claim 6, wherein one of the protective cover (46) and the housing (43) is provided with a clamping groove (51), and the other is provided with a clamping protrusion (52), and the clamping groove (51) and the clamping protrusion (52) are capable of being engaged through insertion.

8. The battery tray (100) according to any one of claims 3 to 7, wherein the side beam (30) is provided with a groove (32) at a periphery on a side of the cavity (31) and the side is close to the outer side of the battery tray (100), a sealing ring (33) is disposed in the groove (32), the battery tray (100) comprises a sealing cover (60) configured to close the cavity (31) on the outer side of the battery tray (100), and the sealing cover (60) is capable of being pressed onto the sealing ring (33) and mounted on the side beam (30) by using a fastener.

9. The battery tray (100) according to any one of claims 3 to 8, wherein a stop boss (34) is provided on a side of the cavity (31) and the side is close to an inner side of the battery tray (100), and an abutting portion (431) is correspondingly disposed on the housing (43), so that the abutting portion (431) abuts against the stop boss (34), and the abutting portion (431) is connected to the stop boss (34) by using a fastener.

10. The battery tray (100) according to any one of claims 3 to 9, wherein the side beam (30) configured to mount the housing (43) is configured as a die-cast side beam formed through die-casting molding, and a plurality of lifting lugs (35) are integrally formed on the die-cast side beam.

11. The battery tray (100) according to claim 10, wherein a plurality of weight reduction structures (36) are formed on the die-cast side beam.

12. The battery tray (100) according to claim 10 or 11, wherein a cable mounting hole (37) is formed on the die-cast side beam.

13. The battery tray (100) according to any one of claims 1 to 12, wherein an explosion-proof valve (50) is disposed on each of two sides of the protection apparatus (40).

14. The battery tray (100) according to any one of claims 1 to 13, wherein the battery tray (100) is divided into two accommodation cavities (71) by an intermediate beam (70), and each of the accommodation cavities (71) is configured to accommodate the plurality of cells (20).

15. The battery tray (100) according to claim 14, wherein the protection apparatus (40) is disposed on a side wall of one of the two accommodation cavities (71), and the cells (20) in the two accommodation cavities (71) are connected to each other.

16. The battery tray (100) according to claim 14, wherein the protection apparatus (40) is disposed on both side walls of the two accommodation cavities (71), and the protection apparatus (40) is connected to the cells (20) in the two accommodation cavities (71) separately.

17. A battery pack (200), comprising a battery tray (100) and a plurality of cells (20) disposed in the battery tray (100), wherein the battery tray (100) is the battery tray (100) according to any one of claims 1 to 16.

18. An electric device (300), comprising the battery pack (200) according to claim 17.
